# FASCICULE DE BREVET EUROPEEN

(11) **EP 2 718 588 B1**
(45) Date de publication et mention de la délivrance du brevet: **30.03.2016**
(21) Numéro de dépôt: 12725052.0
(22) Date de dépôt: 25.04.2012
(51) Int. Cl.: F16F 15/12, F16F 15/14

(54) **DISPOSITIF D'AMORTISSEMENT DE TORSION, NOTAMMENT POUR UNE TRANSMISSION DE VEHICULE AUTOMOBILE**
TORSIONSSCHWINGUNGSDÄMPFER, INSBESONDERE FÜR DEN ANTRIEBSSTRANG EINES KRAFTFAHRZEUGES
TORSIONAL VIBRATION DAMPER, PARTICULARLY FOR THE TRANSMISSION OF A MOTOR VEHICLE.

(30) Priorité: 07.06.2011 FR 1154966
(43) Date de publication de la demande: 16.04.2014
(73) Titulaire: Valeo Embrayages, 80009 Amiens Cedex 2 (FR)
(72) Inventeur: VERHOOG, Roel, F-60190 Gournay Sur Aronde (FR); HENNEBELLE, Michaël, F-62150 Houdain (FR); GRIECO, Giovanni, Colombes 92700 (FR); TERMENON, Norberto, F-75019 Paris (FR)
(74) Mandataire: Tran, Chi-Hai
(86) Numéro de dépôt international: PCT/FR2012/050917
(87) Numéro de publication internationale: WO 2012/168604

(56) Documents cités:
- DE-A1-102008 057 647
- US-A1- 2010 269 497

## Description

L'invention concerne un dispositif d'amortissement de torsion, notamment pour une transmission de véhicule automobile.

L'invention concerne plus particulièrement un dispositif d'amortissement de torsion présentant un axe de rotation d'orientation axiale et comportant au moins :
- un élément d'entrée apte à être entraîné en rotation par un arbre menant,
- un élément de sortie comportant au moins un voile lié en rotation à un arbre mené,
- des organes élastiques à action circonférentielle interposés entre l'élément d'entrée et l'élément de sortie, et
- des première et deuxième rondelles qui, aptes à coopérer avec les organes élastiques, sont montées libres en rotation par rapport aux éléments d'entrée et de sortie.

On connaît de l'état de la technique de nombreux exemples de dispositif d'amortissement de ce type équipant généralement une transmission de véhicule automobile tel que divulgué par exemple dans le document US 2010/0269497 A1.

Dans une transmission de véhicule automobile, un tel dispositif d'amortissement de torsion est associé à un embrayage apte à relier sélectivement le moteur à la boîte de vitesses, tels qu'un embrayage à friction ou un appareil d'accouplement hydrocinétique comportant un embrayage de verrouillage, et cela afin de filtrer les vibrations dues aux acyclismes du moteur.

En effet, un moteur à explosion présente des acyclismes du fait des explosions se succédant dans les cylindres du moteur, lesdits acyclismes variant notamment en fonction du nombre de cylindres.

Les moyens amortisseurs d'un dispositif d'amortissement de torsion ont par conséquent pour fonction de filtrer les vibrations engendrées par les acyclismes et interviennent avant que le couple moteur n'ait été transmis à la boîte de vitesses.

A défaut, des vibrations pénétrant dans la boîte de vitesse y provoqueraient en fonctionnement des chocs, bruits ou nuisances sonores particulièrement indésirables.

C'est l'une des raisons pour lesquelles, on utilise un ou plusieurs moyens d'amortissement aptes à filtrer les vibrations à au moins une fréquence déterminée.

Dans le domaine des transmissions, la recherche de l'obtention d'une filtration toujours plus performante a conduit pour certaines applications à adjoindre un oscillateur pendulaire aux dispositifs d'amortissement conventionnellement mis en oeuvre tant dans les embrayages à friction que dans les appareils d'accouplement hydrocinétique de véhicule automobile.

Un oscillateur pendulaire, encore appelé pendule, comporte au moins une masse ou masselotte, généralement plusieurs, agencée autour de l'axe de rotation de l'arbre moteur et qui est libre d'osciller autour d'un axe fictif sensiblement parallèle à l'axe de rotation de l'arbre moteur.

Lorsque les masses d'un oscillateur pendulaire réagissent aux irrégularités de rotation, elles oscillent de manière à ce que le centre de gravité de chacune de ces masses pendulaires oscille autour d'un axe sensiblement parallèle à l'axe de rotation de l'arbre moteur.

La position radiale du centre de gravité de chacune des masses pendulaires par rapport à l'axe de rotation de l'arbre moteur ainsi que la distance de ce centre de gravité par rapport à l'axe fictif d'oscillation sont établies de manière à ce que, sous l'effet des forces centrifuges, la fréquence d'oscillation de chacune des masses pendulaires soit proportionnelle à la vitesse de rotation de l'arbre moteur, ce multiple pouvant par exemple prendre une valeur proche du rang de l'harmonique prépondérant des vibrations responsables des fortes irrégularités de rotation au voisinage du ralenti.

Le but de la présente invention est tout particulièrement de proposer un dispositif d'amortissement permettant d'améliorer encore les résultats obtenus en conservant notamment un faible encombrement.

Dans ce but, l'invention propose un dispositif d'amortissement de torsion du type décrit précédemment, caractérisé en ce que le dispositif d'amortissement comporte au moins deux oscillateurs pendulaires, la première rondelle comportant au moins un premier oscillateur pendulaire et la deuxième rondelle comportant au moins un deuxième oscillateur pendulaire.

Grâce à l'invention, le dispositif d'amortissement améliore la filtration des vibrations et les oscillateurs pendulaires sont avantageusement portés par les rondelles du dispositif d'amortissement qui assurent respectivement, par rapport aux organes élastiques, une fonction de phasage d'une part, et une fonction de guidage d'autre part.

Avantageusement, une telle rondelle assurant une double fonction de phasage et de guidage permet de réduire le nombre de pièces du dispositif d'amortissement et d'optimiser l'encombrement axial du dispositif.

Avantageusement, lesdites rondelles du dispositif d'amortissement sont agencées axialement aux extrémités avant et arrière du dispositif d'amortissement de manière à être écartées l'une de l'autre de la plus grande distance possible pour un encombrement axial donné du dispositif d'amortissement.

Ainsi, les masses de chacun des premier et deuxième oscillateurs pendulaires peuvent être maximales, en particulier lorsque lesdites masses des premier et deuxième oscillateurs pendulaires sont agencées sur un même diamètre par rapport à l'axe X.

En raison des critères à satisfaire pour assurer les deux fonctions précitées, lesdites rondelles du dispositif d'amortissement sont des pièces qui sont aptes à supporter les masses des oscillateurs pendulaires et permettent d'obtenir un dispositif d'amortissement particulièrement compact tant axialement que radialement.

Selon d'autres caractéristiques de l'invention :
- le premier oscillateur pendulaire porté par la première rondelle comporte au moins une masse pendulaire montée de manière oscillante par rapport à la première rondelle et en ce que le deuxième oscillateur pendulaire porté par la deuxième rondelle comporte au moins une masse pendulaire montée de manière oscillante par rapport à la deuxième rondelle ;
- le premier oscillateur pendulaire et le deuxième oscillateur pendulaire sont accordés différemment, respectivement un premier ordre d'accord pour le premier oscillateur pendulaire et un deuxième ordre d'accord pour le deuxième oscillateur pendulaire ;
- le premier oscillateur pendulaire et le deuxième oscillateur pendulaire sont accordés pour présenter un même ordre d'accord, le premier oscillateur pendulaire présentant un premier ordre d'accord égal au deuxième ordre d'accord du deuxième oscillateur pendulaire ;
- le premier oscillateur pendulaire et le deuxième oscillateur pendulaire sont synchronisés ensemble par l'intermédiaire de moyens de synchronisation reliant ladite au moins une masse pendulaire du premier oscillateur pendulaire à ladite au moins une masse pendulaire du deuxième oscillateur pendulaire ;
- ladite au moins une masse pendulaire de l'un au moins desdits premier et deuxième oscillateurs pendulaires comporte au moins deux masselottes qui sont agencées axialement de part et d'autre de la rondelle associée ;
- la valeur de la masse de ladite au moins une masse pendulaire du premier oscillateur pendulaire est différente de la valeur de la masse de ladite au moins une masse pendulaire du deuxième oscillateur pendulaire ;
- la valeur de la masse de ladite au moins une masse pendulaire du premier oscillateur pendulaire est égale à la valeur de la masse de ladite au moins une masse pendulaire du deuxième oscillateur pendulaire ;
- l'élément d'entrée comporte un premier disque d'entrée et un deuxième disque d'entrée qui sont liés en rotation par des moyens de liaison ;
- les premier et deuxième disques d'entrée sont agencés axialement de part et d'autre dudit au moins un élément de sortie et en ce que les premier et deuxième disques d'entrée sont respectivement agencés axialement entre ledit au moins un élément de sortie et la rondelle associée, la première rondelle étant agencée axialement en avant du premier disque d'entrée et la deuxième rondelle étant agencée axialement en arrière du deuxième disque d'entrée.

Avantageusement, le dispositif d'amortissement selon l'invention équipe un appareil d'accouplement hydrocinétique comportant une turbine et l'élément d'entrée du dispositif d'amortissement est lié en rotation à la turbine.

La turbine est liée en rotation à un moyeu de turbine et au deuxième disque d'entrée par des moyens de fixation, tels que des rivets.

En variante, le dispositif d'amortissement selon l'invention équipant un appareil d'accouplement hydrocinétique comportant une turbine, au moins la deuxième rondelle portant le deuxième oscillateur pendulaire est liée en rotation à la turbine.

La turbine est liée en rotation à la deuxième rondelle par l'intermédiaire de moyens de fixation, tels que des rivets.

Selon aune autre variante, le dispositif d'amortissement selon l'invention équipant un appareil d'accouplement hydrocinétique comportant une turbine, l'élément de sortie du dispositif d'amortissement est lié en rotation à la turbine, directement ou par l'intermédiaire d'un moyeu de turbine.

De préférence, la turbine est liée en rotation au moyeu de turbine par des moyens de fixation, tels que des rivets, et le moyeu de turbine est lié en rotation par des moyens d'accouplement directement à l'arbre mené ou par l'intermédiaire d'un moyeu de sortie du dispositif d'amortissement.

Les moyens d'accouplement entre le moyeu de turbine et le moyeu de sortie du dispositif d'amortissement sont réalisés par coopération de formes, notamment au moyen de cannelures complémentaires que comportent respectivement le moyeu de turbine et le moyeu de sortie.

En variante, les moyens d'accouplement entre le moyeu de turbine et le moyeu de sortie du dispositif d'amortissement sont constitués par des clavettes.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue en perspective éclatée qui représente un mode de réalisation d'un dispositif d'amortissement selon de l'invention ;
- la figure 2 est une vue de face du dispositif d'amortissement selon la figure 1, du côté avant correspondant au côté du moteur ;
- la figure 3 est une vue de face du dispositif d'amortissement selon la figure 1, du côté arrière correspondant au côté de la boîte de vitesses ;
- la figure 4 est une vue de côté du dispositif d'amortissement selon la figure 1 ;
- les figures 5 à 10 sont des demi-vues en coupe axiale du dispositif d'amortissement selon les sections successives qui sont représentées sur la figure 3, respectivement le plan de coupe A-A pour la figure 5, le plan de coupe B-B pour la figure 6, le plan de coupe C-C pour la figure 7, le plan de coupe D-D pour la figure 8, le plan de coupe E-E pour la figure 9 et le plan de coupe F-F pour la figure 10 ;
- la figure 11 est une demi-vue en coupe axiale représentant un exemple de réalisation de moyens de synchronisation ;
- la figure 12 est une demi-vue en coupe axiale qui, analogue aux figures 5 à 11, représente une variante de réalisation du mode de réalisation selon laquelle la turbine est liée à la deuxième rondelle du dispositif d'amortissement ;
- la figure 13 est une demi-vue en coupe axiale qui, analogue aux figures 5 à 11, représente une variante de réalisation du mode de réalisation selon laquelle la turbine est liée à l'élément de sortie.

Dans la suite de la description et les revendications, on utilisera à titre non limitatif et afin d'en faciliter la compréhension, les termes "avant et "arrière" ; "extérieur" et "intérieur" ainsi que les orientations "axial" et "radial" pour désigner, selon les définitions données dans la description, des éléments du dispositif d'amortissement.

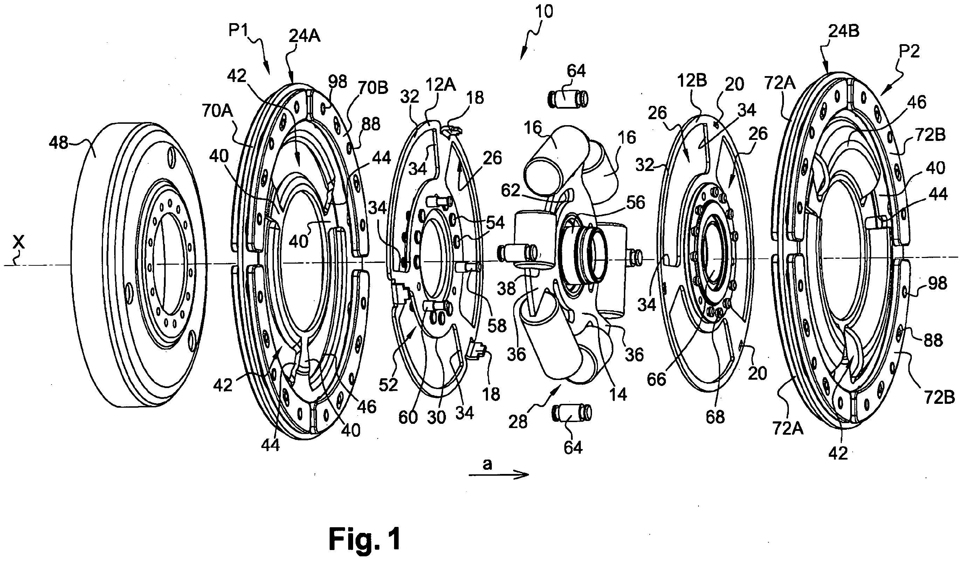

Par convention, l'orientation "axiale" correspond à l'axe de rotation du dispositif d'amortissement et la direction d'avant vers l'arrière correspond à celle indiquée par la flèche "a" sur la figure 1, soit respectivement la gauche et la droite sur la figure 1.

L'orientation "radiale" est dirigée orthogonalement à l'axe de rotation du dispositif d'amortissement de l'intérieur vers l'extérieur en s'éloignant dudit axe et l'orientation "circonférentielle" est dirigée orthogonalement à l'axe du dispositif d'amortissement et orthogonalement à la direction radiale.

Les termes "extérieur" et "intérieur", comme "avant et "arrière", sont utilisés pour définir la position relative d'un élément par rapport à un autre, par référence à l'axe de rotation du dispositif d'amortissement, un élément proche de l'axe est ainsi qualifié d'intérieur par opposition à un élément extérieur situé radialement en périphérie.

Pour la suite de la description, des éléments présentant des fonctions similaires, identiques ou analogues seront désignés par des mêmes numéros de référence.

On a représenté à la figure 1 un dispositif 10 d'amortissement de torsion selon l'invention qui est apte à équiper une transmission de véhicule automobile.

Dans le mode de réalisation et les variantes représentés aux figures, le dispositif 10 d'amortissement est notamment, mais non exclusivement, destiné à équiper un appareil d'accouplement hydrocinétique.

De manière connue, un tel appareil d'accouplement hydrocinétique (non représenté) comporte principalement un embrayage de verrouillage (ou "lock-up" en anglais), un dispositif d'amortissement et un coupleur ou, de préférence, un convertisseur.

L'appareil d'accouplement hydrocinétique comporte un carter étanche formé respectivement d'une partie avant et d'une partie arrière, globalement en forme de coquilles qui sont par exemple assemblées par soudage.

Les parties avant et arrière du carter délimitent un volume général de l'appareil à l'intérieur duquel sont agencés axialement d'avant en arrière l'embrayage de verrouillage, le dispositif d'amortissement et le convertisseur de couple.

Le convertisseur de couple comporte une roue d'impulseur arrière, une roue de turbine avant et une roue de réaction centrale.

La roue d'impulseur comporte des aubes qui sont portées par la partie arrière de carter qui, solidaire en rotation de la partie avant de carter, est apte à être liée en rotation à un arbre menant.

La roue de turbine comporte également des aubes qui font face axialement aux aubes de la roue d'impulseur, la roue de turbine est apte à être liée en rotation à un arbre mené, coaxial à l'axe de rotation du dispositif d'amortissement, par exemple par l'intermédiaire d'un moyeu.

Dans le cas d'une application à un véhicule automobile, l'arbre menant est constitué par le vilebrequin du moteur à combustion interne du véhicule automobile, tandis que l'arbre mené est constitué par l'arbre d'entrée de la boîte de vitesses du véhicule, relié aux moyens de changement de rapport de vitesses.

Le dispositif 10 d'amortissement présente un axe X de rotation qui s'étend, par convention, suivant l'orientation axiale.

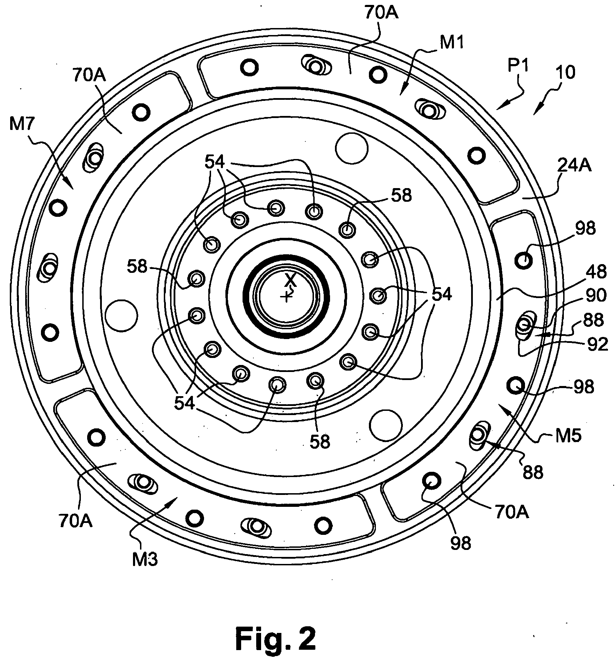

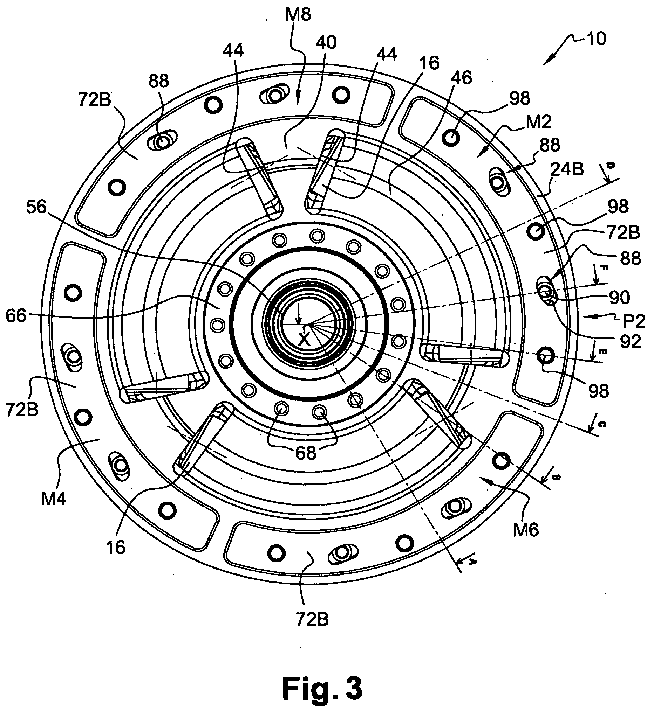

Tel que représenté notamment sur les figures 1 à 4, le dispositif 10 d'amortissement comporte au moins un élément 12 d'entrée, un élément 14 de sortie et des organes 16 élastiques à action circonférentielle qui sont interposés entre l'élément 12 d'entrée et l'élément 14 de sortie.

L'élément 12 d'entrée est destiné à être entraîné en rotation par un arbre menant (non représenté), tel que le vilebrequin du moteur à combustion interne du véhicule automobile équipé d'une transmission dont l'embrayage, qui comporte ledit dispositif 10 d'amortissement, est dans l'exemple d'application un appareil d'accouplement hydrocinétique du type décrit précédemment.

L'élément 14 de sortie est destiné à être lié en rotation à un arbre mené (non représenté), tel que l'arbre d'entrée de la boîte de vitesses.

L'élément 12 d'entrée comporte un premier disque 12A d'entrée et un deuxième disque 12B d'entrée, respectivement agencé axialement à l'avant et à l'arrière du dispositif 10 d'amortissement et l'élément 14 de sortie comporte au moins un voile 22, agencé axialement en position centrale entre lesdits premier et deuxième disques 12A, 12B.

Le voile 22 est ici réalisé en une seule pièce, en variante le voile 22 est réalisé en deux pièces distinctes, agencées parallèlement l'une à l'autre en position centrale du dispositif 10 d'amortissement.

Avantageusement, le premier disque 12A d'entrée et le deuxième disque 12B d'entrée sont liés en rotation par des moyens 18, 20 de liaison.

Les moyens de liaison en rotation du premier disque 12A d'entrée et du deuxième disque 12B d'entrée sont par exemple constitués par au moins une patte 18 axiale qui, solidaire de l'un 12A des disques, est reçue dans une ouverture 20 complémentaire ménagée dans l'autre 12B des disques.

De préférence, les moyens de liaison des disques 12A, 12B comportent trois pattes 18 qui sont réparties circonférentiellement de manière régulière sur le premier disque 12A agencé axialement à l'avant, soit à 120° autour de l'axe X de rotation du dispositif 10 d'amortissement.

De la même manière, le deuxième disque 12B agencé axialement à l'arrière comporte également trois ouvertures 20 réparties circonférentiellement de manière régulière à 120° autour de l'axe X de rotation du dispositif 10 d'amortissement.

Avantageusement, les pattes 18 qui s'étendent axialement vers l'arrière à partir du premier disque 12A assurent une fonction d'entretoise et participent au bon positionnement des pièces, en particulier des premier et deuxième disques 12A, 12B d'entrée par rapport au voile 22 de l'élément 14 de sortie du dispositif 10 d'amortissement qui est interposé axialement entre lesdits disques 12A, 12B d'entrée.

Le dispositif 10 d'amortissement comporte encore au moins deux rondelles, respectivement une première rondelle 24A et une deuxième rondelle 24B.

La première rondelle 24A et la deuxième rondelle 24B sont aptes à coopérer avec les organes 16 élastiques.

Dans le dispositif 10 d'amortissement, le couple est transmis par l'intermédiaire des organes élastiques 16 à action circonférentielle des disques 12A et 12B formant l'élément d'entrée, au voile 22 formant ici une partie de l'élément 14 de sortie.

Les premier et deuxième disques 12A, 12B d'entrée comportent chacun des fenêtres 26 et le voile 22 comporte des fenêtres 28, les organes élastiques 16 à action circonférentielle respectivement reçus dans lesdites fenêtres 26 et 28 étant ainsi interposés entre l'élément 12 d'entrée et l'élément 14 de sortie.

Les fenêtres 26 et 28 sont par exemple au nombre de trois réparties circonférentiellement de manière régulière autour de l'axe X de rotation du dispositif 10 d'amortissement.

Les fenêtres 26 des disques 12A, 12B d'entrée sont fermées et respectivement délimitées, d'une part, par un bord 30 intérieur et un bord 32 extérieur qui s'étendent respectivement circonférentiellement et, d'autre part, par deux bords 34 s'étendant respectivement radialement et qui, chacun, relient ensemble une extrémité du bord 30 intérieur et du bord 32 extérieur.

Les trois fenêtres 26 sont reliées entre elles par des parties de matière au niveau desquelles sont disposées, à la périphérie radiale extérieure, les pattes 18 de liaison des disques 12A, 12B d'entrée de manière chaque patte 18 ou ouverture 20 soit disposée circonférentiellement entre deux fenêtres 26 consécutives.

Les fenêtres 28 du voile 22 de l'élément 14 de sortie sont ouvertes radialement vers l'extérieur et les fenêtres 28 sont séparées entre elles par trois pattes 26 agencées en étoile, réparties circonférentiellement à 120°, chacune des pattes 36 comportant deux bords 38 opposés avec lesquels coopèrent respectivement une extrémité d'un des organes élastiques 16 à action circonférentielle.

De préférence, chaque fenêtre 26, 28 reçoit deux organes élastiques 16 à action circonférentielle et non un seul de sorte que lesdits organes élastiques 16 sont dans l'exemple de réalisation au nombre de six, répartis circonférentiellement en trois groupes de deux organes élastiques 16.

Les organes élastiques 16 sont par exemple formés par des ressorts hélicoïdaux présentant un axe principal d'orientation circonférentielle. Comme cela est visible à la figure 1, les organes élastiques 16 sont agencés en une rangée circulaire autour du voile 22 notamment.

Un groupe de deux organes élastiques 16 présente des avantages par rapport à l'utilisation d'un unique organe élastique 16 cintré de longueur équivalente, en particulier une meilleure sollicitation des organes élastiques 16 sensiblement selon leur axe principal et une moindre sensibilité aux efforts radiaux exercés par la force centrifuge.

Cependant, les deux organes élastiques 16 formant un groupe doivent être reliés entre eux afin de pouvoir fonctionner en série.

Cette fonction dite de "phasage" des organes élastiques 16 d'un même groupe est assurée, dans le dispositif 10 d'amortissement, par la première rondelle 24A et la deuxième rondelle 24B.

Pour ce faire, chacune des première et deuxième rondelles 24A et 24B comporte des moyens 40 de phasage aptes à relier ensemble deux organes élastiques 16 logés dans une même fenêtre 26 des disques 12A, 12B d'entrée et une même fenêtre 28 du voile 22.

Les première et deuxième rondelles 24A et 24B comportent des fenêtres 42, ici au nombre de trois, deux fenêtres 42 consécutives étant séparées entre elles par un moyen 40 de phasage.

Les fenêtres 42 des première et deuxième rondelles 24A et 24B sont décalées angulairement par rapport aux fenêtres 26 et 28 de manière que les moyens 40 de phasage se positionnent entre deux organes élastiques 16, chaque moyen 40 de phasage comportant deux bords 44 opposés d'orientation radiale qui coopèrent chacun avec l'un des deux organes élastiques 16 d'un groupe.

Pour assurer la fonction de phasage, la première rondelle 24A et la deuxième rondelle 24B sont montées libres en rotation par rapport aux éléments 12 d'entrée et 14 de sortie.

La distance d'écartement axial entre les deux rondelles 24A et 24B est inférieure au diamètre des organes élastiques 16.

Avantageusement, la première rondelle 24A et la deuxième rondelle 24B assurent également, outre une fonction de phasage des organes élastiques 16 à action circonférentielle, une fonction de guidage.

En variante non représentée, la fonction de guidage des organes élastiques 16 à action circonférentielle est assurée par d'autres pièces supplémentaires et distinctes de la première rondelle 24A et la deuxième rondelle 24B.

Toutefois, le mode de réalisation représenté aux figures est particulièrement avantageux dès lors que la première rondelle 24A et la deuxième rondelle 24B assurent la fonction de phasage et la fonction de guidage grâce à quoi, outre le nombre de pièce plus réduit, le dispositif 10 d'amortissement est notamment moins encombrant axialement.

La première rondelle 24A et la deuxième rondelle 24B comportent respectivement, au niveau des fenêtres 42 des moyens 46 de guidage aptes à maintenir en position les organes élastiques 16 à action circonférentielle, tant axialement que radialement.

Les organes élastiques 16 à action circonférentielle sont en particulier sollicités en fonctionnement par des efforts dus à la force centrifuge s'exerçant selon la direction radiale.

Dans l'exemple d'un dispositif 10 d'amortissement équipant un appareil d'accouplement hydrocinétique, le premier disque 12A d'entrée est apte à être lié en rotation, par l'intermédiaire d'une pièce 48 de liaison, à un embrayage de verrouillage (non représenté).

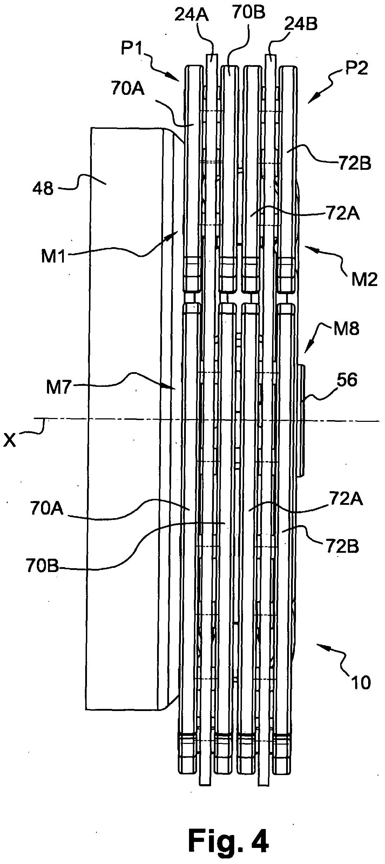

Notamment visible sur les figures 1 et 4, la pièce 48 de liaison présente en coupe axiale une forme en "L" inversé comprenant une branche d'orientation radiale et une branche d'orientation axiale qui s'étend vers l'avant, à partir de la partie extérieure de la branche d'orientation radiale.

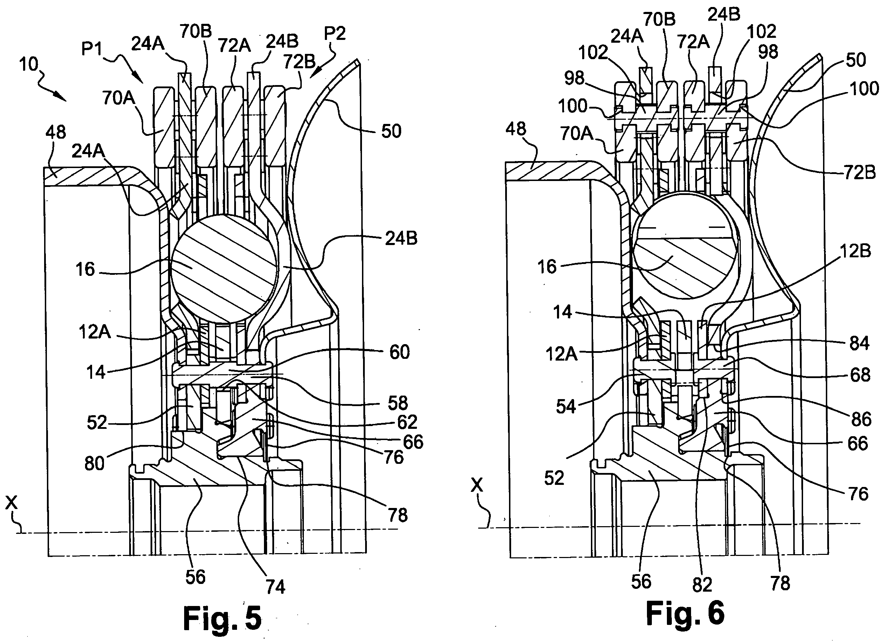

De préférence, dans le mode de réalisation représenté aux figures 1 à 11, le deuxième disque 12B d'entrée est lié en rotation à une turbine 50 du convertisseur, la turbine 50 étant représentée sur les seules figures 5 à 11.

En fonctionnement, l'embrayage de verrouillage étant à l'état débrayé (ouvert), le couple est d'abord transmis par le convertisseur, plus précisément par la turbine 50 au deuxième disque 12B par lequel le couple entre dans le dispositif 10 d'amortissement avant d'être transmis par le voile 22.

Ensuite, lorsque l'embrayage de verrouillage est à l'état embrayé (fermé), le couple est transmis par la pièce 48 de liaison au premier disque 12A d'entrée par lequel le couple entre dans le dispositif 10 d'amortissement avant d'être transmis par le voile 22.

De préférence, l'embrayage de verrouillage comportant ladite pièce 48 de liaison est de type multi-disques. En variante, l'embrayage de verrouillage comportant ladite pièce 48 de liaison est de type mono- ou bi-disques.

De manière connue, l'embrayage de verrouillage (non représenté) comporte un piston qui est apte à être commandé sélectivement en déplacement pour venir serrer ou non des disques de friction liés en rotation à la pièce 48 de liaison et ainsi provoquer les changements d'état de l'embrayage, entre les états débrayé et embrayé.

De préférence, le dispositif 10 d'amortissement comporte un flasque 52 qui est interposé axialement entre le premier disque 12A d'entrée et ladite pièce 48 de liaison, au voisinage de la partie radialement intérieure du premier disque 12A d'entrée et de ladite pièce 48 de liaison.

En variante, le flasque 52 est supprimé et la pièce 48 de liaison est conformée pour venir directement au contact du premier disque 12A d'entrée.

Avantageusement, un tel flasque 52 permet de simplifier la fabrication de la pièce 48 de liaison et de renforcer la liaison entre le premier disque 12A d'entrée et la pièce 48 de liaison entre lesquelles le flasque 52 est interposé axialement.

La liaison entre le premier disque 12A d'entrée et la pièce 48 de liaison de l'embrayage de verrouillage, ainsi que le flasque 52 lorsque le dispositif 10 d'amortissement comporte un tel flasque 52, est réalisée par l'intermédiaire de moyens 54 de fixation.

De préférence, les moyens 54 de fixation sont constitués par des rivets, en variante par tout autre moyen de liaison approprié.

Avantageusement, le dispositif 10 d'amortissement comporte un moyeu 56 de sortie par l'intermédiaire duquel le voile 22 est apte à être lié en rotation à l'arbre mené.

Avantageusement, le voile 22 est fixé par soudage au moyeu 56 de sortie pour lier en rotation, sans jeu, ces deux pièces formant ledit élément 14 de sortie du dispositif 10 d'amortissement.

De préférence, la liaison en rotation entre le voile 22 et le moyeu 56 de sortie est réalisée par soudage par friction.

En variante, la liaison en rotation entre le voile 22 et le moyeu 56 de sortie est réalisée par tout moyen approprié par exemple par coopération de formes, telle que par engrènement entre des dentures complémentaires.

Avantageusement, l'élément 12 d'entrée et l'élément 14 de sortie du dispositif 10 d'amortissement sont liés en rotation avec un débattement angulaire qui est limité par des moyens 58 de butée.

De préférence et tel que représenté sur la figure 5, les moyens 58 de butée du dispositif 10 d'amortissement sont constitués par au moins une entretoise intervenant entre les premier et deuxième disques 12A et 12B d'entrée et le voile 22.

Les moyens 58 de butée sont par exemple constitués par trois entretoises réparties angulairement de manière régulière sur la circonférence des premier et deuxième disques 12A et 12B d'entrée.

Chaque entretoise 58 comporte un tronçon 60 central qui est reçu dans une ouverture 62 associée du voile 22, l'ouverture 62 déterminant la capacité de débattement angulaire entre les éléments 12 d'entrée et 14 de sortie lorsque le tronçon 60 central de l'entretoise 58 vient en butée à l'une des extrémités de l'ouverture 62.

Avantageusement, la première rondelle 24A et la deuxième rondelle 24B sont liées en rotation par des moyens 64 de liaison.

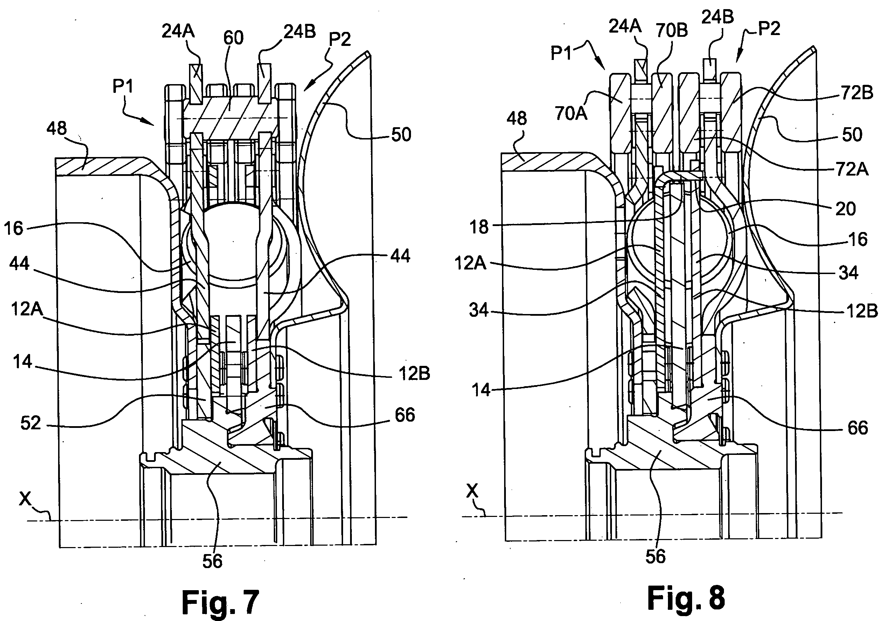

De préférence, les moyens 64 de liaison entre la première rondelle 24A et la deuxième rondelle 24B sont constitués par des entretoises qui sont plus particulièrement visibles sur la figure 7.

Dans le mode de réalisation, le deuxième disque 12B d'entrée est lié en rotation à la turbine 50 du convertisseur.

Avantageusement, le dispositif 10 d'amortissement comporte un moyeu 66 de turbine. Le deuxième disque 12B d'entrée, le moyeu 66 de turbine et la turbine 50 sont liés en rotation par des moyens 68 de fixation.

De préférence, les moyens 68 de liaison sont constitués par des rivets qui relient ensemble le deuxième disque 12B d'entrée, le moyeu 66 de turbine et la turbine 50.

Les entretoises 58 formant les moyens de butée assurent également à chacune de leurs extrémités une fonction de liaison, axialement à l'avant entre le premier disque d'entrée 12A, le flasque 52 et la pièce 48 de liaison et, axialement à l'arrière, entre le deuxième disque 12B d'entrée, le moyeu 66 de turbine et la turbine 50.

Ainsi, chaque entretoise 58 remplace alors respectivement un rivet 54 à l'avant et un rivet 68 à l'arrière.

Le dispositif 10 d'amortissement comporte des premiers moyens d'amortissement de torsion formés par les organes élastiques 16 à action circonférentielle et des seconds moyens d'amortissement de torsion formés par au moins un oscillateur pendulaire ou pendule.

Avantageusement, lesdits premiers moyens d'amortissement de torsion comportent une seule rangée d'organes élastiques 16 circonférentiellement répartis autour de l'axe X de rotation du dispositif 10 d'amortissement.

En variante, lesdits premiers moyens d'amortissement de torsion comportent deux rangées d'organes élastiques 16 décalées radialement l'une par rapport à l'autre, les organes élastiques 16 de chacune des rangées (ou étage) présentant de préférence des raideurs différentes.

Selon l'invention, le dispositif 10 d'amortissement comporte au moins deux oscillateurs pendulaires formant des seconds moyens d'amortissement de torsion du dispositif 10 d'amortissement.

Dans le mode de réalisation représenté aux figures, le dispositif 10 d'amortissement selon l'invention comporte au moins deux oscillateurs pendulaires, ici un double oscillateur pendulaire.

Le dispositif 10 d'amortissement comporte respectivement au moins un premier oscillateur pendulaire P1 porté par la première rondelle 24A et au moins un deuxième oscillateur pendulaire P2 porté par la deuxième rondelle 24B.

De préférence, chacune des rondelles 24A, 24B comporte un oscillateur pendulaire caractérisé par son ordre d'accord.

Toutefois, en variante non représentée, au moins l'une des rondelles 24A, 24B comporte plus d'un oscillateur pendulaire, c'est-à-dire au moins un oscillateur pendulaire primaire et un oscillateur pendulaire secondaire, respectivement caractérisé chacun par un ordre d'accord différent de celui de l'autre.

Le premier oscillateur pendulaire P1 comporte au moins une masse Mₙ pendulaire montée de manière oscillante par rapport à la première rondelle 24A et le deuxième oscillateur pendulaire P2 comporte au moins une masse Mₙ₊₁ pendulaire montée de manière oscillante par rapport à la deuxième rondelle 24B.

A titre d'exemple non limitatif, un moteur à quatre cylindres provoque des vibrations qui présentent une harmonique de fréquence donnée ayant différents rangs d'harmonique.

Selon une première conception, le premier oscillateur P1 pendulaire et le deuxième oscillateur P2 pendulaire sont accordés différemment, respectivement selon un premier ordre d'accord pour le premier oscillateur P1 pendulaire et selon un deuxième ordre d'accord pour le deuxième oscillateur P2 pendulaire.

Avantageusement, chacun des premier et deuxième pendules P1, P2 porté par l'une associée des rondelles 24A, 24B présente donc un ordre d'accord donné correspondant à un rang d'harmonique déterminé.

A titre non limitatif, dans l'exemple précité d'un moteur à quatre cylindres les vibrations d'une harmonique de fréquence 2Fo sont avantageusement aptes à être filtrées par un premier oscillateur P1 pendulaire présentant un ordre d'accord égal à l'ordre « 2 » et par un deuxième oscillateur P2 pendulaire présentant un ordre d'accord égal à l'ordre « 4 ».

De la même manière pour un moteur à six cylindres, le premier oscillateur P1 pendulaire présente avantageusement un ordre d'accord égal à l'ordre « 3 » et le deuxième oscillateur P2 pendulaire un ordre d'accord égal à l'ordre « 6 ».

En fonction des applications et par conséquent du type de moteur, les vibrations à filtrer présentent parfois un rang d'harmonique prépondérant.

Dans ce cas, selon une deuxième conception, le premier oscillateur P1 pendulaire et le deuxième oscillateur P2 pendulaire sont susceptibles d'être accordés pour présenter un même ordre d'accord.

En effet, en présence d'un rang d'harmonique particulièrement prépondérant par rapport aux autres rangs, un oscillateur pendulaire est parfois insuffisant pour obtenir une filtration satisfaisante, sauf à en augmenter la masse mais on rappellera, pour les transmissions, la nécessité de composer avec des contraintes d'implantation dans le moteur.

Selon cette deuxième conception correspondant au mode de réalisation de l'invention représenté dans les figures, le premier oscillateur P1 pendulaire et le deuxième oscillateur P2 pendulaire présentent avantageusement un même ordre d'accord, par exemple un ordre d'accord égal à l'ordre « 2 » pour un moteur à quatre cylindres.

Avantageusement, le premier oscillateur P1 pendulaire et le deuxième oscillateur P2 pendulaire sont alors synchronisés ensemble par l'intermédiaire de moyens de synchronisation reliant ladite au moins une masse pendulaire Mₙ du premier oscillateur P1 pendulaire à ladite au moins une masse pendulaire Mₙ₊₁ du deuxième oscillateur P2 pendulaire.

De préférence, dans le mode de réalisation, la valeur de la masse de ladite au moins une masse Mₙ pendulaire du premier oscillateur P1 pendulaire est égale à la valeur de la masse de ladite au moins une masse Mₙ₊₁ pendulaire du deuxième oscillateur P2 pendulaire.

De préférence, la valeur des masses pendulaires du premier oscillateur P1 pendulaire et du deuxième oscillateur P2 pendulaire sont égale comme l'est celui de l'ordre d'accord, cependant l'ordre d'accord pourrait être le même pour le premier oscillateur P1 pendulaire et le deuxième oscillateur P2 pendulaire sans nécessairement que le soit également la valeur des masses pendulaires.

En variante, la valeur de la masse de ladite au moins une masse Mₙ pendulaire du premier oscillateur P1 pendulaire est différente de la valeur de la masse de ladite au moins une masse Mₙ₊₁ pendulaire du deuxième oscillateur P2 pendulaire.

De préférence et tel que représenté sur les figures 1 à 4, au moins l'un des premier et deuxième oscillateurs P1, P2 pendulaire du dispositif 10 d'amortissement, ici les deux, comporte un nombre pair de masses Mₙ ; Mₙ₊₁ pendulaires.

Avantageusement, le premier oscillateur P1 pendulaire comporte au moins une paire de masses Mₙ pendulaires comportant respectivement une masse M1 pendulaire et une masse M3 pendulaire.

De préférence, l'indice "n" est un nombre entier et impair.

De préférence, la masse M1 pendulaire et la masse M3 pendulaire sont par conséquent appairées.

Les masses M1, M3 pendulaire du premier oscillateur P1 pendulaire sont agencées, circonférentiellement sur la rondelle 24A associée, diamétralement à l'opposé l'une de l'autre.

De préférence, le premier oscillateur P1 pendulaire porté par la rondelle 24A comporte un nombre pair de masses pendulaires, ici un total de quatre masses M1, M3, M5 et M7 réparties circonférentiellement de manière régulière, tel qu'illustré par les figures 1,2 et 4.

Avantageusement, ladite au moins une masse Mₙ pendulaire du premier oscillateur P1 pendulaire comporte au moins deux masselottes 70A et 70B qui sont agencées axialement de part et d'autre de la rondelle 24A associée.

Chacune des quatre masses M1, M3, M5 et M7 du premier oscillateur P1 pendulaire comporte au moins deux masselottes 70A et 70B qui sont agencées axialement de part et d'autre de la rondelle 24A associée.

Bien entendu, le mode de réalisation est donné uniquement à titre d'exemple et, en variante, le premier oscillateur P1 pendulaire comporte un nombre impair de masses Mₙ, par exemple trois ou cinq masses, chacune desdites masses comportant avantageusement deux masselottes 70A et 70B qui sont agencées axialement de part et d'autre de la rondelle 24A associée.

Avantageusement, le deuxième oscillateur P2 pendulaire comporte au moins une paire de masses Mₙ₊₁ pendulaire comportant respectivement une masse M2 pendulaire et une masse M4 pendulaire.

De préférence, la masse M2 pendulaire et la masse M4 pendulaire sont par conséquent appairées. Les masses M2, M4 pendulaire du deuxième oscillateur P2 pendulaire sont agencées, circonférentiellement sur la rondelle 24B associée, diamétralement à l'opposé l'une de l'autre.

De préférence, le deuxième oscillateur P2 pendulaire porté par la rondelle 24B comporte un nombre pair de masses pendulaire, ici un total de quatre masses M2, M4, M6 et M8 réparties circonférentiellement de manière régulière, tel qu'illustré par les figures 1,3 et 4.

Avantageusement, ladite au moins une masse Mₙ₊₁ pendulaire du deuxième oscillateur P2 pendulaire comporte au moins deux masselottes 72A et 72B qui sont agencées axialement de part et d'autre de la rondelle 24B associée.

Chacune des quatre masses M2, M4, M6 et M8 du deuxième oscillateur P2 pendulaire comporte au moins deux masselottes 72A et 72B qui sont agencées axialement de part et d'autre de la rondelle 24B associée.

En variante, le deuxième oscillateur P2 pendulaire comporte un nombre impair de masses Mn, chacune desdites masses comportant avantageusement deux masselottes 72A et 72B qui sont agencées axialement de part et d'autre de la rondelle 24B associée.

Tel que visible notamment à la figure 4, les premier et deuxième disques 12A, 12B d'entrée sont agencés axialement de part et d'autre de l'élément 14 de sortie formé par le voile 22.

L'écartement axial entre le premier disque 12A d'entrée et le deuxième disque 12B d'entrée est donné par les pattes 18 formant les moyens de liaison et déterminé de manière à éviter tout contact avec le voile 22.

Les premier et deuxième disques 12A, 12B d'entrée sont respectivement agencés axialement entre le voile 22 et la rondelle 24A, 24B associée, la première rondelle 24A étant agencée axialement en avant du premier disque 12A d'entrée et la deuxième rondelle 24B étant agencée axialement en arrière du deuxième disque 12B d'entrée.

Le moyeu 56 de sortie comporte, axialement à l'arrière, une face 74 cylindrique externe sur laquelle est montée le moyeu 66 de turbine, le moyeu 66 de turbine étant bloqué axialement vers l'avant par une partie centrale du moyeu 56 de sortie et axialement vers l'arrière par un anneau 76 élastique qui est monté dans une gorge 78 du moyeu 56 de sortie.

Le moyeu 56 de sortie est axialement étagé et comporte, en avant de la face 74 cylindrique, ladite partie centrale à laquelle le voile 22 est soudé et encore en avant, une face 80 cylindrique.

Le moyeu 66 de turbine comporte axialement successivement, de l'avant vers l'arrière, une face 82 cylindrique sur laquelle est centrée le deuxième disque 12B d'entrée, une face 84 cylindrique centrale sur laquelle est centrée la deuxième rondelle 12B et une face 86 cylindrique sur laquelle est centrée la turbine 50.

Les premier et deuxième oscillateurs P1, P2 pendulaires sont susceptible d'être réalisés selon de nombreuses variantes de réalisation, l'exemple décrit et représenté est en conséquence donné à titre non limitatif.

Comme représenté à la figure 1, les masselottes 70A et 70B du premier oscillateur P1 pendulaire et les masselottes 72A et 72B du deuxième oscillateur P2 pendulaire sont respectivement agencées à la périphérie radiale extérieure de la première rondelle 24A et de la deuxième rondelle 24B de manière à être soumise à une force centrifuge maximale lors de la rotation autour de l'axe X du dispositif 10 d'amortissement.

Dans l'exemple de réalisation, le premier oscillateur P1 pendulaire comporte quatre paires de masselottes 70A, 70B correspondant aux masses M1 à M7 et le deuxième oscillateur P2 pendulaire comporte également quatre paires de masselottes 72A, 72B correspondant aux masses M2 à M8.

Les masselottes 70A, 70B portées par la première rondelle 24A et les masselottes 72A, 72B portées par la deuxième rondelle 24B sont agencées radialement sur un même diamètre, c'est-à-dire à la même distance de l'axe X de rotation et à l'extérieur des organes élastiques 16.

Ainsi, le dispositif 10 d'amortissement est équilibré.

En variante, les masselottes 70A, 70B du premier oscillateur P1 pendulaire sont décalées radialement par rapport aux masselottes 72A, 72B du deuxième oscillateur P2 pendulaire.

En variante, le nombre de masselottes du premier oscillateur P1 pendulaire est différent de celui du deuxième oscillateur P2 pendulaire et même lorsque chacun comporte le même nombre de masselottes, la valeur de la masse et/ou de l'ordre d'accord peut différer d'un oscillateur pendulaire à l'autre.

Comme représenté à la figure 1, chacune des masselottes 70A, 70B et 72A, 72B pendulaires présente globalement une forme de plaquette qui s'étend dans un plan radial et qui est incurvée en arc de cercle de manière que son contour extérieur épouse le bord périphérique extérieur de la rondelle 24 associée.

De préférence, les masselottes 70A et 70B du premier oscillateur P1 pendulaire sont montées oscillantes par rapport à la première rondelle 24A par l'intermédiaire de moyens 88 de roulement associés, comme le sont également les masselottes 72A et 72B du deuxième oscillateur P2 pendulaire par rapport à la deuxième rondelle 24B.

Les oscillateurs P1 et P2 pendulaires sont ici analogues de sorte que la description qui suit faite pour l'un, vaut également pour l'autre.

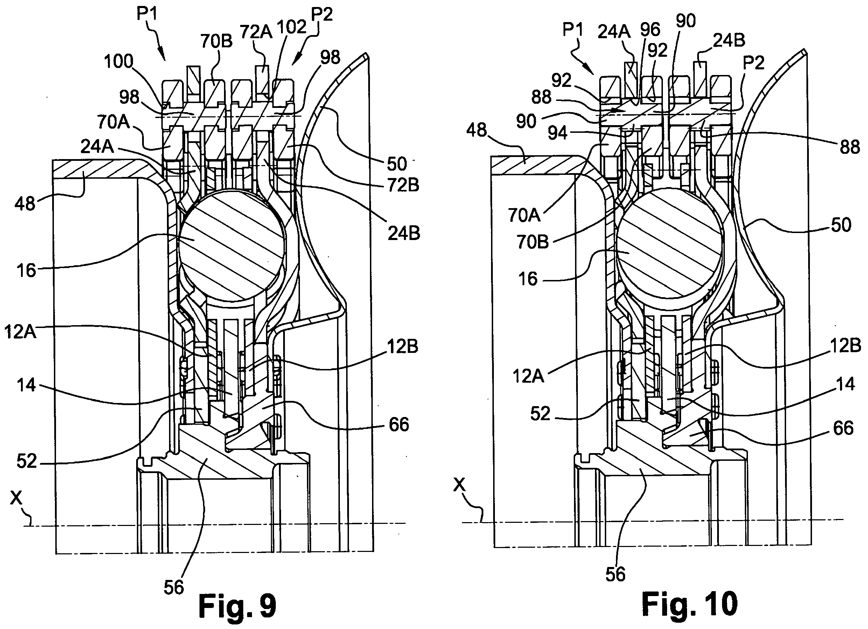

Dans le premier oscillateur P1 pendulaire et tel qu'illustré à la figure 10, les moyens de roulement sont constitués par au moins un pion 88 d'articulation dont chaque tronçon 90 d'extrémité est reçu dans un orifice 92 d'une masselotte 70A, 70B pendulaire associée, ledit pion comportant un tronçon 94 central reçu coulissant dans une fente 96 de guidage associée de la rondelle 24A.

L'orifice 92 de chaque masselotte 70A, 70B pendulaire est une piste dans laquelle le tronçon 90 d'extrémité associé du pion 88 d'articulation est reçu coulissant dans un plan radial, orthogonal à l'axe X d'orientation axiale.

Tel qu'illustré à la figure 6, le premier oscillateur P1 pendulaire comporte également au moins un pion 98 de fixation, de préférence trois pions, chaque tronçon d'extrémité du pion 98 de fixation étant fixée à l'une des masselottes 70A, 70B pendulaire.

Chaque tronçon d'extrémité axiale libre d'un pion 98 de fixation est fixé dans un orifice 100 d'une masselotte pendulaire associée, les pions 98 sont fixées aux masselottes par déformation de leurs extrémités axiale libre à la manière d'un rivet afin que les deux masselottes 70A et 70B pour le premier oscillateur P1 pendulaire (ou 72A et 72B) soient fixées rigidement l'une à l'autre.

Le pion 98 de fixation forme une entretoise qui maintient les deux masselottes 70A et 70B pendulaires écartées axialement d'une distance déterminée de manière que les masselottes 70A, 70B pendulaires n'entrent pas en contact avec la rondelle 24A.

La première rondelle 24A comporte pour chaque pion 98 de fixation une fente 102 de guidage traversante axialement pour permettre le passage du tronçon central de chaque pion 98.

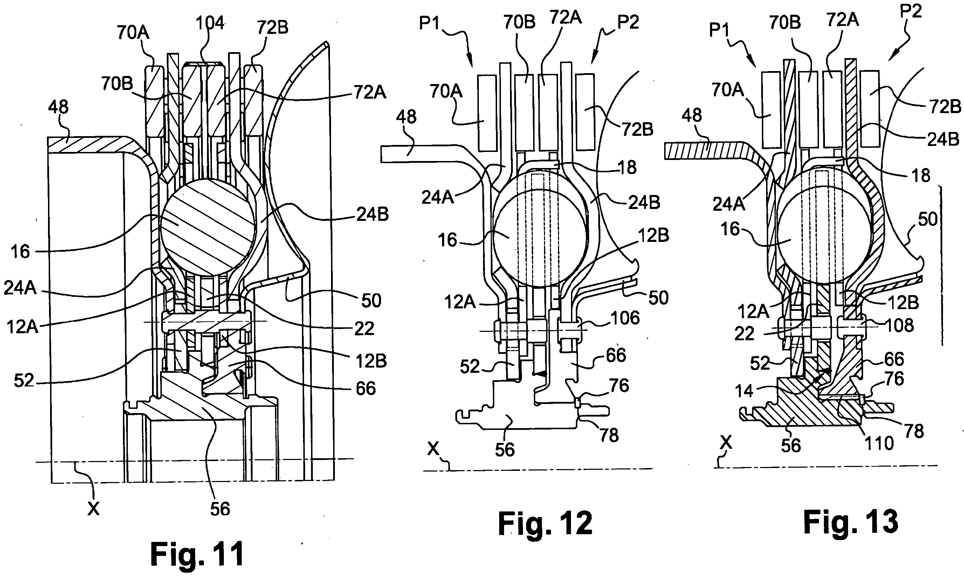

La figure 11 représente un exemple de réalisation de moyens de synchronisation précités mis en oeuvre lorsque le premier oscillateur P1 pendulaire et le deuxième oscillateur P2 pendulaire présentent un même ordre d'accord.

Le premier oscillateur P1 pendulaire et le deuxième oscillateur P2 pendulaire sont avantageusement synchronisés ensemble par l'intermédiaire de moyens de synchronisation reliant ladite au moins une masse M1 pendulaire du premier oscillateur P1 pendulaire à ladite au moins une masse M2 pendulaire du deuxième oscillateur P2 pendulaire.

Tel que représenté sur la figure 11, les moyens de synchronisation sont par exemple réalisés sous la forme d'une pièce 104 formant un pont reliant axialement une masselotte 70B du premier oscillateur P1 pendulaire à une masselotte 72A du deuxième oscillateur P2 pendulaire.

Grâce à de tels moyens 104 de synchronisation, les premier et deuxième oscillateurs P1, P2 pendulaires se comportent globalement comme un unique oscillateur pendulaire.

Dans l'exemple précédent d'un rang d'harmonique prépondérant, il est ainsi possible, grâce au double oscillateur pendulaire selon l'invention, d'obtenir une filtration particulièrement efficace d'un rang d'harmonique donné en utilisant deux oscillateurs pendulaires ayant le même ordre d'accord et avantageusement synchronisés entre eux.

Bien entendu, un tel exemple n'est pas limitatif, on comprendra qu'un dispositif 10 d'amortissement comportant au moins deux oscillateurs pendulaires présente tout d'autant d'intérêt en particulier lorsque chaque oscillateur pendulaire présente un ordre d'accord donné correspondant à un des rangs d'harmonique.

La liaison en rotation de la turbine 50 avec le dispositif 10 d'amortissement est susceptible d'être réalisée de différente manière, notamment selon que l'on souhaite ou pas ajouter l'inertie de la turbine 50 sur un élément du dispositif 10 d'amortissement.

Dans le mode de réalisation représenté sur les figures 1 à 11, la turbine 50 est liée en rotation au deuxième disque 12B d'entrée et à la deuxième rondelle 24B.

La figure 12 représente une variante de réalisation dans laquelle au moins la deuxième rondelle 24B portant le deuxième oscillateur P2 pendulaire est liée en rotation à la turbine 50 du convertisseur.

Par comparaison avec le mode de réalisation précédent, la turbine 50 n'est ici plus liée en rotation au deuxième disque 12B d'entrée, donc à l'élément 12 d'entrée du dispositif 10 d'amortissement.

En effet, la première rondelle 24A et la deuxième rondelle 24B sont montées libres en rotation par rapport aux éléments 12 d'entrée et 14 de sortie.

La turbine est liée en rotation à la deuxième rondelle par l'intermédiaire de moyens 106 de fixation, tels que des rivets.

Tel que décrit précédemment, le dispositif 10 d'amortissement comporte avantageusement un moyeu 66 de turbine auquel est liée en rotation la turbine 50 d'un convertisseur, ledit moyeu 66 de turbine étant lié en rotation directement à un arbre mené ou par l'intermédiaire du moyeu 56 de sortie du dispositif 10 d'amortissement.

Le moyeu 66 de turbine est lié en rotation au moyeu 56 de sortie par l'intermédiaire de moyens d'accouplement, ledit moyeu 56 de sortie étant, d'une part, lié en rotation à l'élément 14 de sortie du dispositif 10 d'amortissement et, d'autre part, apte à entraîner en rotation un arbre mené, notamment par engrènement.

La figure 13 représente une autre variante dans laquelle l'élément 14 de sortie du dispositif 10 d'amortissement est lié en rotation à la turbine 50, directement ou par l'intermédiaire du moyeu 66 de turbine.

De préférence, la turbine 50 est liée en rotation au moyeu 66 de turbine par des moyens 108 de fixation, tels que des rivets, et le moyeu 66 de turbine est lié en rotation est lié en rotation par des moyens 110 d'accouplement directement à l'arbre mené ou par l'intermédiaire d'un moyeu 56 de sortie du dispositif 10 d'amortissement.

De préférence, les moyens 110 d'accouplement entre le moyeu 66 de turbine et le moyeu 56 de sortie du dispositif 10 d'amortissement sont réalisés par coopération de formes, notamment au moyen de cannelures complémentaires que comportent respectivement le moyeu 66 de turbine et le moyeu 56 de sortie.

En variante, les moyens 110 d'accouplement entre le moyeu 66 de turbine et le moyeu 56 de sortie du dispositif 10 d'amortissement sont constitués par des clavettes (non représentées).

Les moyens 110 d'accouplement entre le moyeu 66 de turbine et le moyeu 56 de sortie du dispositif 10 d'amortissement sont susceptibles d'être réalisés selon d'autres variantes, par exemple et de manière non limitative par un montage en force (serrage), par soudage ou encore par un montage de type "bikini", c'est-à-dire un sertissage et un arrêt axial.

## Revendications

1. Dispositif (10) d'amortissement de torsion, notamment pour une transmission de véhicule automobile, présentant un axe (X) de rotation d'orientation axiale et comportant au moins :
- un élément (12) d'entrée apte à être entraîné en rotation par un arbre menant,
- un élément (14) de sortie comportant au moins un voile (22) lié en rotation à un arbre mené,
- des organes élastiques (16) à action circonférentielle interposés entre l'élément (12) d'entrée et l'élément (14) de sortie, et
- des première et deuxième rondelles (24A, 24B) qui, aptes à coopérer avec les organes élastiques (16), sont montées libres en rotation par rapport aux éléments (12) d'entrée et (14) de sortie,
**caractérisé en ce que** le dispositif (10) d'amortissement comporte au moins deux oscillateurs pendulaires, la première rondelle (24A) comportant au moins un premier oscillateur (P1) pendulaire et la deuxième rondelle (24B) comportant au moins un deuxième oscillateur (P2) pendulaire.

2. Dispositif selon la revendication 1, **caractérisé en ce que** le premier oscillateur (P1) pendulaire porté par la première rondelle (24A) comporte au moins une masse (Mₙ) pendulaire montée de manière oscillante par rapport à la première rondelle (24A) et **en ce que** le deuxième oscillateur (P2) pendulaire porté par la deuxième rondelle (24B) comporte au moins une masse (Mₙ₊₁) pendulaire montée de manière oscillante par rapport à la deuxième rondelle (24B).

3. Dispositif selon l'une des revendications 1 ou 2, **caractérisé en ce que** le premier oscillateur (P1) pendulaire et le deuxième oscillateur (P2) pendulaire sont accordés différemment, respectivement un premier ordre d'accord pour le premier oscillateur (P1) pendulaire et un deuxième ordre d'accord pour le deuxième oscillateur (P2) pendulaire.

4. Dispositif l'une des revendications 1 ou 2, **caractérisé en ce que** le premier oscillateur (P1) pendulaire et le deuxième oscillateur (P2) pendulaire sont accordés pour présenter un même ordre d'accord.

5. Dispositif selon la revendication 4, **caractérisé en ce que** le premier oscillateur (P1) pendulaire et le deuxième oscillateur (P2) pendulaire sont synchronisés ensemble par l'intermédiaire de moyens (104) de synchronisation reliant ladite au moins une masse (Mₙ) pendulaire du premier oscillateur (P1) pendulaire à ladite au moins une masse (Mₙ₊₁) pendulaire du deuxième oscillateur (P2) pendulaire.

6. Dispositif selon l'une quelconque des revendications 1 à 5, **caractérisé en ce que** ladite au moins une masse (Mₙ, Mₙ₊₁) pendulaire de l'un au moins desdits premier et deuxième oscillateurs (P1, P2) pendulaires comporte au moins deux masselottes (70A, 70B, 72A, 72B) qui sont agencées axialement de part et d'autre de la rondelle (24A, 24B) associée.

7. Dispositif selon l'une quelconque des revendications 1 à 6, **caractérisé en ce que** la valeur de la masse de ladite au moins une masse (Mₙ) pendulaire du premier oscillateur (P1) pendulaire est différente de la valeur de la masse de ladite au moins une masse (Mₙ₊₁) pendulaire du deuxième oscillateur (P2) pendulaire.

8. Dispositif selon l'une quelconque des revendications 1 à 6, **caractérisé en ce que** la valeur de la masse de ladite au moins une masse (Mₙ) pendulaire du premier oscillateur (P1) pendulaire est égale à la valeur de la masse de ladite au moins une masse (Mₙ₊₁) pendulaire du deuxième oscillateur (P2) pendulaire.

9. Dispositif selon l'une quelconque des revendications 1 à 8, **caractérisé en ce que** l'élément d'entrée comporte un premier disque (12A) d'entrée et un deuxième disque (12b) d'entrée qui sont liés en rotation par des moyens de liaison (18, 20).

10. Dispositif selon la revendication 9, **caractérisé en ce que** les premier et deuxième disques (12A, 12B) d'entrée sont agencés axialement de part et d'autre dudit au moins un élément (14) de sortie et **en ce que** les premier et deuxième disques (12A, 12B) d'entrée sont respectivement agencés axialement entre ledit au moins un élément (14) de sortie et la rondelle (24A, 24B) associée.

11. Dispositif selon l'une quelconque des revendications 1 à 10, équipant un appareil d'accouplement hydrocinétique comportant une turbine (50), **caractérisé en ce que** l'élément (12) d'entrée du dispositif (10) d'amortissement est lié en rotation à la turbine (50).

12. Dispositif selon l'une quelconque des revendications 1 à 10, équipant un appareil d'accouplement hydrocinétique comportant une turbine (50), **caractérisé en ce que** au moins la deuxième rondelle (24B) portant le deuxième oscillateur (P2) pendulaire est liée en rotation à la turbine (50).

13. Dispositif selon l'une quelconque des revendications 1 à 10, équipant un appareil d'accouplement hydrocinétique comportant une turbine (50), **caractérisé en ce que** l'élément (14) de sortie du dispositif (10) d'amortissement est lié en rotation à la turbine (50), directement ou par l'intermédiaire d'un moyeu (66) de turbine.

## Patentansprüche

1. Torsionsdämpfungsvorrichtung (10) insbesondere für ein Kraftfahrzeuggetriebe, das eine Drehachse (X) mit axialer Orientierung aufweist und wenigstens Folgendes umfasst:
- ein Eingangselement (12), das durch eine führende Welle rotatorisch angetrieben wird,
- ein Ausgangselement (14), das wenigstens eine Ummantelung (22) aufweist, die mit einer geführten Welle drehfest verbunden ist,
- elastische Organe (16) mit Umfangswirkung, die zwischen das Eingangselement (12) und das Ausgangselement (14) eingefügt sind, und
- erste und zweite Scheiben (24A, 24B), die mit den elastischen Organen (16) zusammenwirken können und in Bezug auf das Eingangselement (12) und das Ausgangselement (14) frei drehbar montiert sind,
**dadurch gekennzeichnet, dass** die Dämpfungsvorrichtung (10) wenigstens zwei Pendeloszillatoren umfasst, wobei die erste Scheibe (24A) wenigstens einen ersten Pendeloszillator (P1) umfasst und die zweite Scheibe (24B) wenigstens einen zweiten Pendeloszillator (P2) umfasst.

2. Vorrichtung nach Anspruch 1, **dadurch gekennzeichnet, dass** der erste Pendeloszillator (P1), der von der ersten Scheibe (24A) getragen wird, wenigstens eine Pendelmasse (Mₙ) umfasst, die oszillierend in Bezug auf die erste Scheibe (24A) montiert ist, und dass der zweite Pendeloszillator (P2), der von der zweiten Scheibe (24B) getragen wird, wenigstens eine Pendelmasse (Mₙ₊₁) umfasst, die oszillierend in Bezug auf die zweite Scheibe (24B) montiert ist.

3. Vorrichtung nach einem der Ansprüche 1 oder 2, **dadurch gekennzeichnet, dass** der erste Pendeloszillator (P1) und der zweite Pendeloszillator (P2) unterschiedlich abgestimmt sind, nämlich mit einer ersten Abstimmordnung für den ersten Pendeloszillator (P1) bzw. mit einer zweiten Abstimmordnung für den zweiten Pendeloszillator (P2).

4. Vorrichtung nach einem der Ansprüche 1 oder 2, **dadurch gekennzeichnet, dass** der erste Pendeloszillator (P1) und der zweite Pendeloszillator (P2) so abgestimmt sind, dass sie dieselbe Abstimmordnung aufweisen.

5. Vorrichtung nach Anspruch 4, **dadurch gekennzeichnet, dass** der erste Pendeloszillator (P1) und der zweite Pendeloszillator (P2) über Synchronisationsmittel (104), die die wenigstens eine Pendelmasse (Mₙ) des ersten Pendeloszillators (P1) mit der wenigstens einen Pendelmasse (Mₙ₊₁) des zweiten Pendeloszillators (P2) verbinden, miteinander synchronisiert sind.

6. Vorrichtung nach einem der Ansprüche 1 bis 5, **dadurch gekennzeichnet, dass** die wenigstens eine Pendelmasse (Mₙ, Mₙ₊₁) des ersten und/oder des zweiten Pendeloszillators (P1, P2) wenigstens zwei Pendelgewichte (70A, 70B, 72A, 72B) aufweist, die axial beiderseits der zugeordneten Scheibe (24A, 24B) angeordnet sind.

7. Vorrichtung nach einem der Ansprüche 1 bis 6, **dadurch gekennzeichnet, dass** der Wert der Masse der wenigstens einen Pendelmasse (Mₙ) des ersten Pendeloszillators (P1) von dem Wert der Masse der wenigstens einen Pendelmasse (Mₙ₊₁) des zweiten Pendeloszillators (P2) verschieden ist.

8. Vorrichtung nach einem der Ansprüche 1 bis 6, **dadurch gekennzeichnet, dass** der Wert der Masse der wenigstens einen Pendelmasse (Mₙ) des ersten Pendeloszillators (P1) gleich dem Wert der Masse der wenigstens einen Pendelmasse (Mₙ₊₁) des zweiten Pendeloszillators (P2) ist.

9. Vorrichtung nach einem der Ansprüche 1 bis 8, **dadurch gekennzeichnet, dass** das Eingangselement eine erste Eingangsplatte (12A) und eine zweite Eingangsplatte (12b), die durch Verbindungsmittel (18, 20) drehfest verbunden sind, umfasst.

10. Vorrichtung nach Anspruch 9, **dadurch gekennzeichnet, dass** die erste und die zweite Eingangsplatte (12A, 12B) axial beiderseits des wenigstens einen Ausgangselements (14) angeordnet sind und dass die erste und die zweite Eingangsplatte (12A, 12B) jeweils axial zwischen dem wenigstens einen Ausgangselement (14) und der zugeordneten Scheibe (24A, 24B) angeordnet sind.

11. Vorrichtung nach einem der Ansprüche 1 bis 10, mit der ein hydrokinetisches Kopplungsgerät ausgerüstet ist, das eine Turbine (50) umfasst, **dadurch gekennzeichnet, dass** das Eingangselement (12) der Dämpfungsvorrichtung (10) mit der Turbine (50) drehfest verbunden ist.

12. Vorrichtung nach einem der Ansprüche 1 bis 10, mit der ein hydrokinetisches Kopplungsgerät ausgerüstet ist, das eine Turbine (50) umfasst, **dadurch gekennzeichnet, dass** wenigstens die zweite Scheibe (24B), die den zweiten Pendeloszillator (P2) trägt, mit der Turbine (50) drehfest verbunden ist.

13. Vorrichtung nach einem der Ansprüche 1 bis 10, mit der ein hydrokinetisches Kopplungsgerät ausgerüstet ist, das eine Turbine (50) umfasst, **dadurch gekennzeichnet, dass** das Ausgangselement (14) der Dämpfungsvorrichtung (10) mit der Turbine (50) direkt oder über eine Nabe (66) der Turbine drehfest verbunden ist.

## Claims

1. Torsion damping device (10), in particular for a motor vehicle transmission, having an axis (X) of rotation of axial orientation and comprising at least:
- an input element (12) capable of being rotated by a driving shaft,
- an output element (14) comprising at least one web (22) rotationally connected to a driven shaft,
- elastic members (16) with circumferential action interposed between the input element (12) and the output element (14), and
- first and second washers (24A, 24B) which, while being capable of cooperating with the elastic members (16), are mounted free in rotation with respect to the input element (12) and output element (14),
**characterized in that** the damping device (10) comprises at least two pendulum oscillators, the first washer (24A) comprising at least one first pendulum oscillator (P1) and the second washer (24B) comprising at least one second pendulum oscillator (P2).

2. Device according to Claim 1, **characterized in that** the first pendulum oscillator (P1) borne by the first washer (24A) comprises at least one pendulum mass (Mₙ) mounted in an oscillating manner with respect to the first washer (24A), and **in that** the second pendulum oscillator (P2) borne by the second washer (24B) comprises at least one pendulum mass (Mₙ₊₁) mounted in an oscillating manner with respect to the second washer (24B).

3. Device according to either of Claims 1 and 2, **characterized in that** the first pendulum oscillator (P1) and the second pendulum oscillator (P2) are tuned differently, with respectively a first tuning order for the first pendulum oscillator (P1) and a second tuning order for the second pendulum oscillator (P2).

4. Device according to either of Claims 1 and 2, **characterized in that** the first pendulum oscillator (P1) and the second pendulum oscillator (P2) are tuned to have one and the same tuning order.

5. Device according to Claim 4, **characterized in that** the first pendulum oscillator (P1) and the second pendulum oscillator (P2) are mutually synchronized by way of synchronization means (104) connecting the said at least one pendulum mass (Mₙ) of the first pendulum oscillator (P1) to the said at least one pendulum mass (Mₙ₊₁) of the second pendulum oscillator (P2).

6. Device according to any one of Claims 1 to 5, **characterized in that** the said at least one pendulum mass (Mₙ, Mₙ₊₁) of at least one of the said first and second pendulum oscillators (P1, P2) comprises at least two flyweights (70A, 70B, 72A, 72B) which are arranged axially one on either side of the associated washer (24A, 24B).

7. Device according to any one of Claims 1 to 6, **characterized in that** the value of the mass of the said at least one pendulum mass (Mₙ) of the first pendulum oscillator (P1) is different from the value of the mass of the said at least one pendulum mass (Mₙ₊₁) of the second pendulum oscillator (P2).

8. Device according to any one of Claims 1 to 6, **characterized in that** the value of the mass of the said at least one pendulum mass (Mₙ) of the first pendulum oscillator (P1) is equal to the value of the mass of the said at least one pendulum mass (Mₙ₊₁) of the second pendulum oscillator (P2).

9. Device according to any one of Claims 1 to 8, **characterized in that** the input element comprises a first input disc (12A) and a second input disc (12b) which are rotationally connected by connection means (18, 20).

10. Device according to Claim 9, **characterized in that** the first and second input discs (12A, 12B) are arranged axially one on either side of the said at least one output element (14), and **in that** the first and second input discs (12A, 12B) are respectively arranged axially between the said at least one output element (14) and the associated washer (24A, 24B).

11. Device according to any one of Claims 1 to 10, equipping a hydrokinetic coupling apparatus comprising a turbine (50), **characterized in that** the input element (12) of the damping device (10) is rotationally connected to the turbine (50).

12. Device according to any one of Claims 1 to 10, equipping a hydrokinetic coupling apparatus comprising a turbine (50), **characterized in that** at least the second washer (24B) bearing the second pendulum oscillator (P2) is rotationally connected to the turbine (50).

13. Device according to any one of Claims 1 to 10, equipping a hydrokinetic coupling apparatus comprising a turbine (50), **characterized in that** the output element (14) of the damping device (10) is rotationally connected to the turbine (50) directly or via a turbine hub (66).
